# EUROPÄISCHE PATENTSCHRIFT

(11) **EP 0 551 638 B1**
(45) Veröffentlichungstag und Bekanntmachung des Hinweises auf die Patenterteilung: **22.05.1996**
(21) Anmeldenummer: 92121742.8
(22) Anmeldetag: 21.12.1992
(51) Int. Cl.: A23L 1/03, A23L 1/275, A23L 2/38

(54) **Stabile, flüssige Präparate fettlöslicher Substanzen**
Stable fluid preparation of fat-soluble substances
Préparations fluides stables de substances solubles dans des matières grasses

(30) Priorität: 14.01.1992 DE 4200728
(43) Veröffentlichungstag der Anmeldung: 21.07.1993
(73) Patentinhaber: BASF Aktiengesellschaft, D-67063 Ludwigshafen (DE)
(72) Erfinder: Schweikert, Loni, Dr., W-6700 Ludwigshafen (DE); Sambale, Clemens, Dr., W-6737 Boehl-Iggelheim (DE)

(56) Entgegenhaltungen:
- EP-A- 0 239 086
- EP-A- 0 361 928
- GB-A- 2 190 822
- PATENT ABSTRACTS OF JAPAN, Band 11, Nr. 167 (C-425), 28. Mai 1987; & JP - A - 62000419 (SHISEIDO CO. LTD.) 06.01.1987
- PATENT ABSTRACTS OF JAPAN, Band 7, Nr. 235 (C-191), 19. Oktober 1983; & JP-A-58128141 (SUMITOMO KAGAKU KOGYO KK) 30.07.1983
- DATABASE WPIL, Derwent Publications Ltd., London, GB; DATABASE WPIL, AN 89- 230828, Woche 8932; & JP - A - 1165519 (OBARA KAKO KK) 29.06.1989
- PATENT ABSTRACTS OF JAPAN, Band 6, Nr. 169 (C-122) 2. September 1982; & JP - A - 57085317 (RIKEN VITAMIN CO. LTD.) 28.05.1982

## Beschreibung

Die vorliegende Erfindung betrifft neue Flüssig-Formulierungen von fettlöslichen Substanzen sowie ein Verfahren zu deren Herstellung. Diese physiologisch verträglichen Zubereitungen finden insbesondere Verwendung in flüssigen Lebens- und Futtermitteln.

Wasserdispergierbarkeit und Feinverteilung von fettlöslichen physiologisch wirksamen Stoffen ist erforderlich, um die Substanz dem Organismus in gut resorbierbarer Form zur Verfügung zu stellen. Im allgemeinen werden geeignete Präparate hergestellt, indem der fettlösliche oder in einem eßbaren Öl gelöste Stoff in eine schutzkolloidhaltige Wasserphase einemulgiert wird, die gegebenenfalls zusätzlich einen Emulgator enthält. Das Schutzkolloid umhüllt die fettlösliche Phase, stabilisiert die Dispersion und ist verantwortlich für die nötige Wasserdispergierbarkeit. Als Schutzkolloide werden häufig Gelatine, Gummi arabicum, Dextrin, Stärke und andere aus natürlichen Quellen gewonnene Stoffe verwendet. Ihnen allen ist gemeinsam, daß sie gegen mikrobiologischen Verderb anfällig sind und über einen längeren Zeitraum in der Regel nur in getrockneter Form gelagert werden können, es sei denn, man setzt der Formulierung ein Konservierungsmittel zu. Dies ist aber in vielen Fällen nicht erwünscht. Aus diesem Grunde schließt sich nach erfolgter Dispergierung häufig ein Trocknungsschritt an, auch dann, wenn das Präparat für den Einsatz in einem flüssigen Medium gedacht ist und daher eine flüssige Formulierung wegen der einfacheren Einarbeitung vorzuziehen wäre.

Eine Möglichkeit, den mikrobiellen Verderb eines Produktes zu vermeiden, besteht darin, der wäßrigen Phase hohe Zuckerkonzentrationen zuzusetzen. In der deutschen Patentschrift DE 2 363 534 wird die Herstellung von entsprechenden zuckerhaltigen flüssigen Vitamin- und Carotinoid-Präparaten beschrieben, wobei physiologisch unbedenkliche Emulgatoren wie Lecithin oder Ascorbylpalmitat zur Stabilisierung verwendet werden. Ein Nachteil von solchen Produkten ist aber die Kristallisationsneigung des Zuckers oder Zuckeralkohols, z.B. bei Lagerung des Produktes bei niedrigen Temperaturen, was zu unerwünschten Inhomogenitäten führt. Außerdem ist infolge des hohen Zucker- oder Zuckeralkoholgehaltes eine gute Fließfähigkeit nicht immer gewährleistet. Diese Nachteile können vermieden werden, wenn als äußere Phase ein flüssiger und physiologisch unbedenklicher Polyalkohol, wie Glycerin verwendet wird.

Die europäische Patentschrift EP 0 361 928 beschreibt die Herstellung von extrem feinteiligen Emulsionen mit einem Glycerin/Wasser-Gemisch als äußere Phase, wobei als Emulgatoren Phospholipide oder nicht-ionogene Emulgatoren verwendet werden. Die in den Beispielen genannten Emulsionen unterliegen nur über einen Zeitraum von 3 Monaten keinen Veränderungen.

Andere Patentschriften, die die Verwendung von Polyalkoholen in carotinoid- oder vitaminhaltigen Emulsionen beschreiben, sind entweder auf die zusätzliche Verwendung eines Alkohols wie Ethanol (JA 47 25 220), oder eines nicht-ionogenen Emulgators wie Polyglycerinfettsäureester (JP 61 260 860) oder von beiden (JA 62 000 419) angewiesen.

In vielen Formulierungen, insbesondere für den Lebensmittelbereich, sind aber die Ingredienzien Alkohol und nicht-ionogene Emulgatoren nicht erwünscht bzw. lebensmittelrechtlich nicht allgemein zugelassen. In der Japanischen Patentschrift JP 58 128 141 wird ferner die Herstellung von in Weichgelatine-Kapseln abgefüllten Carotinoid-Emulsionen auf Basis von Glycerin oder anderen mehrwertigen Alkoholen beschrieben. Die in den Beispielen verwendeten Emulgatoren sind ebenfalls nicht-ionogene Emulgatoren, und als weiterer Nachteil ist der relativ niedrige Wirkstoff-Gehalt zu werten.

Es bestand daher die Aufgabe, flüssige Präparate fettlöslicher Substanzen vorzuschlagen, die über einen langen Zeitraum (> 6 Monate) stabil sind und die genannten Nachteile nicht haben.

Diese Aufgabe wurde erfindungsgemäß gelöst mit Präparaten enthaltend als wesentliche Bestandteile
a) mindestens eine feindispergierte physiologisch verträgliche fettlösliche Substanz als disperse Phase
b) Glycerin oder Glycerin im Gemisch mit Wasser als äußere Phase unter Verwendung von
c) Estern der Ascorbinsäure mit langkettigen Fettsäuren als Emulgator und Stabilisator.

Als physiologisch verträgliche fettlösliche Substanzen kommen z.B. die fettlöslichen Vitamine A, D, E oder K, sowie Carotinoide, wie Canthaxanthin, Astaxanthin, Zeaxanthin, Lycopin, Apocarotinal und insbesondere β-Carotin in Betracht. Carotinoide sind in der Natur weitverbreitete Farbpigmente, die in vielen Nahrungsmitteln in feinstverteilter Form enthalten sind und ihnen eine charakteristische Färbung verleihen. Neben ihrer allseits bekannten Pro-Vitamin-A-Wirkung sind sie deswegen auch als Farbstoffe für die Lebensmittel-, Futtermittel- und pharmazeutische Industrie von Interesse. Die Färbungen, die durch höherprozentige Carotinoid-Präparate (z.B. 10 %ige Trockenpulver) erzielt werden, decken in der Regel den Bereich orange bis rot ab. Höherprozentige β-Carotin-haltige Präparate gemäß der vorliegenden Erfindung zeichnen sich demgegenüber durch einen brillianten Gelbton, wie er für viele Lebensmittel gewünscht wird, sowie eine hohe Farbkraft aus. Darüberhinaus kommen als fettlösliche Substanzen Glyceride von mehrfach ungesättigten Fettsäuren, wie Weizenöl, Sonnenblumenöl, Maiskeimöl etc. oder Mischungen der genannten Öle in Betracht. Schließlich sind ganz allgemeine, beliebige fettlösliche Substanzen als Bestandteil der Präparate geeignet, die eine physiologische Rolle im menschlichen oder tierischen Organismus spielen und aufgrund ihrer Wasserunslöslichkeit in der Regel zu Emulsionen oder wasserdispergierbaren Trockenpulvern verarbeitet werden.

Die Konzentration der physiologisch verträglichen fettlöslichen Substanzen beträgt in der Regel 1 bis 50 Gew.-%, vorzugsweise 10 bis 40 und insbesondere 20 bis 30 Gew.-%, bezogen auf die Präparate. Das an sich schwerlösliche β-Carotin ist jedoch in der Regel in Konzentrationen von 1 bis 20 Gew.-%, vorzugsweise 5 bis 15 Gew.-%, bezogen auf die Präparate enthalten.

Die Menge des Glycerins beträgt im allgemeinen 99 bis 50, vorzugsweise 80 bis 60 Gew.-%, bezogen auf das Präparat, wobei das Glycerin teilweise durch Wasser ersetzt sein kann im Bereich des Gewichtsverhältnisses Glycerin:Wasser von 100:0 bis 50:50.

Als Ester der Ascorbinsäure sind vor allem die Ester der Ascorbinsäure mit C₁₆- bis C₁₈-Fettsäuren zu nennen, insbesondere Ascorbylpalmitat.

Die Wirkung des Ascorbylpalmitats als Emulgator kann durch Bildung eines Salzes, insbesondere Alkalisalzes, in der Regel das Natriumsalz noch gesteigert werden, wobei Natronlauge in der Regel in der 0,5 bis 1 molaren Menge zugesetzt wird.

Ascorbylpalmitat ist ein in der Lebens- und Futermittelindustrie breit einsetzbarer, physiologisch unbedenklicher Emulgator, der darüber hinaus auch antioxidativ wirkt, eine Eigenschaft, die bei Carotinoiden und vielen Vitaminen die Stabilität erhöht. Der antioxidative Effekt läßt sich bekanntermaßen dadurch noch steigern, daß der fettlöslichen Phase zusätzlich Tocopherol beigemischt wird.

Die erfindungsgemäßen Präparate können in an sich bekannter Weise hergestellt werden, wie etwa durch Einemulgieren der wirkstoffhaltigen Fettphase in die Glycerin-Phase.

Die Dispersionen zeichnen sich durch hohe Stabilität, auch in wäßrigen Systemen wie z.B. in Getränken mit saurem pH, aus. Ein weiterer Vorteil der erfindungsgemäßen Präparate besteht darin, daß sie - auch bei hohem Anteil an fettlöslicher Substanz - eine geringe Trübung aufweisen, was bei bestimmten Lebensmitteln, gewünscht wird.

Teilchengrößen der dispersen Phase liegen unter 5 µm, insbesondere unter 0,5 µm. Fettlösliche Substanzen im Rahmen der vorliegenden Erfindung sind insbesondere fettlösliche Vitamine, z.B. Vitamin A, D, E und K, sowie auch Fette aus mehrfach ungesättigte Fettsäuren und Carotinoide.

Das Verhältnis der wirkstoffhaltigen Ölphase zu den anderen im Produkt befindlichen Stoffen beträgt in der Regel von 1 % : 99 % bis 50 % : 50 % und ist abhängig von den Eigenschaften der zu dispergierenden fettlöslichen Substanz sowie von der Anforderung an eine gleichmäßige und feine Verteilung.

Die neuen stabilen, flüssigen Präparate eignen sich hervorragend zur einfachen und exakten Dosierung für den Zusatz von z.B. von Vitaminen zu flüssigen Lebens- oder Futtermitteln oder im Falle des β-Carotins zum Färben von Getränken z.B. Limonaden.

### Beispiel 1

In einem 1000 ml Becherglas werden 450 g Glycerin vorgelegt, 4,8 g einer 3 molaren Natronlaugelösung zugegeben und die Mischung in einem Wasserbad auf 75°C erwärmt. Nach Zugabe von 6 g Ascorbylpalmitat wird mit einem Magnetrührer so lange gerührt, bis eine fast klare Lösung entstanden ist. Mittels einer Zahnkranzdispergiermaschine (z.B. Ultraturrax®) werden 205 g D/L-α-Tocopherolacetat im Laufe von 5 Minuten einemulgiert.

Die erhaltene Emulsion wird auf 30°C abgekühlt und anschließend durch einmalige Passage über einen Hochdruckhomogenisator bei 800 bar homogenisiert. Die Emulsion weist eine mittlere Teilchengröße von 0,2 µm und einen Tocopherolacetat-Gehalt von 30 % auf.

### Beispiel 2

Wie für Beispiel 1 beschrieben wird aus 480 g Glycerin, 3,2 g 3-molarer Natronlauge, 4 g Ascorbylpalmitat und 130 g Vitamin-A-Palmitat eine Emulsion hergestellt, indem die Mischung zunächst mit einem bei 60°C 5 Minuten lang emulgiert wird. Die Emulsion wird anschließend auf 40°C abgekühlt und durch einmalige Passage durch einen Hochdruckhomogenisator bei 800 bar homogenisiert. Man erhält so eine Emulsion mit einer mittleren Teilchengröße von 0,3 µm und einem Wirkstoff-Gehalt von 20 % Vitamin-A-Palmitat.

### Beispiel 3

Wie für Beispiel 1 beschrieben wird aus 450 g Glycerin, 4,8 g 3-molarer Natronlauge, 6 g Ascorbylpalmitat und 205 g Sonnenblumenöl eine Emulsion hergestellt, indem die Mischung zunächst mit einem bei 60°C 5 Minuten lang emulgiert wird. Die Emulsion wird anschließend auf 30°C abgekühlt und durch einmalige Passage durch einen Hochdruckhomogenisator bei 800 bar homogenisiert. Man erhält so eine Emulsion mit einer mittleren Teilchengröße von 0,3 µm und einem Ölanteil von 30 %.

### Beispiel 4

a) In einem 100 ml Becherglas werden 56 g destilliertes Wasser und 5,6 g 3-molare Natronlauge in einem Wasserbad auf 60°C erwärmt. Dann werden 7 g Ascorbylpalmitat zugegeben und die Mischung mit einem Magnetrührer so lange gerührt, bis eine fast klare Lösung entstanden ist.
b) 385 g Glycerin wird in einem Wasserbad auf 60°C erwärmt und mit der nach a) hergestellten Lösung unter langsamem Rühren mit einem Magnetrührer gemischt.
c) 75 g β-Carotin, 5,6 g α-Tocopherol und 166 g fraktioniertes Kokosöl (Miglyol® 810) (Fa. Hüls, Troisdorf) werden in einen 500 ml Rundkolben eingewogen und in einem Ölbad, das auf 185⁰C temperiert ist, über einen Zeitraum von 25 Minuten unter Rühren mit einem Paddelrührer erhitzt, wobei das β-Carotin in Lösung geht.
d) Die gemäß c) hergestellte Lösung wird mittels einer Zahnkranzdispergiermaschine (z.B. Ultraturrax®) über einen Zeitraum von 2 Minuten in die nach b) hergestellte Lösung einemulgiert. Die erhaltene Emulsion wird auf 50°C abgekühlt und anschließend durch einmalige Passage über einen Hochdruckhomogenisator bei 800 bar homogenisiert.

Die erhaltende Emulsion weist eine mittlere Teilchengröße von 0,2 µm und einen β-Carotin-Gehalt von 10,4 % auf.

## Patentansprüche

1. Stabile flüssige Präparate, enthaltend als wesentliche Bestandteile
a) mindestens eine feindispergierte physiologisch verträgliche fettlösliche Substanz als disperse Phase
b) Glycerin oder Glycerin im Gemisch mit Wasser als äußere Phase unter Verwendung von
c) Estern der Ascorbinsäure mit langkettigen Fettsäuren als Emulgator und Stabilisator.

2. Stabile flüssige Präparate gemäß Anspruch 1, enthaltend als wesentliche Bestandteile
a) 1 bis 50 Gew.-%, bezogen auf das flüssige Präparat mindestens einer physiologisch verträgliche fettlöslichen Substanz ausgewählt aus Vitamin A, D, E oder K oder deren Derivaten, Carotinoiden und Glyceriden von polyungesättigten Fettsäuren,
b) 99 bis 50 Gew.-%, bezogen auf die Präparate, Glycerin oder Glycerin/Wasser im Verhältnis von 100:0 bis 50:50, und
c) 0,2 bis 5 Gew.-%, bezogen auf die Präparate, an Estern der Ascorbinsäure mit Fettsäuren mit 16 bis 18 C-Atomen.

3. Stabile flüssige Präparate gemäß Anspruch 1, enthaltend die physiologisch verträgliche fettlöslichen Substanzen in Teilchengrößen kleiner 5 µm.

4. Verfahren zur Herstellung von stabilen flüssigen Präparaten gemäß Anspruch 1, dadurch gekennzeichnet, daß man Glycerin, gegebenenfalls im Gemisch mit Wasser, einen Ester der Ascorbinsäure mit einer langkettigen Fettsäure, gegebenenfalls unter Zusatz von Natronlauge, im molaren Verhältnis zum Ester von 0 bis 1 und die physiologisch verträgliche fettlösliche Substanz miteinander emulgiert und die Emulsion unter erhöhtem Druck homogenisiert.

5. Verwendung von Präparaten gemäß Anspruch 1 als Zusatz zu flüssigen Lebensmitteln oder Futtermitteln.

## Claims

1. A stable liquid product containing as essential ingredients
a) at least one finely dispersed physiologically tolerated fat-soluble substance as disperse phase
b) glycerol or glycerol mixed with water as continuous phase using
c) esters of ascorbic acid with long-chain fatty acids as emulsifier and stabilizer.

2. A stable liquid product as claimed in claim 1, containing as essential ingredients
a) from 1 to 50% by weight, based on the liquid product, of at least one physiologically tolerated fat-soluble substance selected from vitamin A, D, E or K or derivatives thereof, carotenoids and glycerides of polyunsaturated fatty acids,
b) from 99 to 50% by weight, based on the product, of glycerol or glycerol/water in the ratio from 100:0 to 50:50, and
c) from 0.2 to 5% by weight, based on the product, of esters of ascorbic acid with fatty acids of from 16 to 18 carbons.

3. A stable liquid product as claimed in claim 1, containing the physiologically tolerated fat-soluble substances in particle sizes below 5 µm.

4. A process for producing stable liquid products as claimed in claim 1, which comprises emulsifying together glycerol, with or without admixed water, an ester of ascorbic acid with a long-chain fatty acid, with or without addition of sodium hydroxide solution, in the molar ratio to the ester of from 0 to 1 and the physiologically tolerated fat-soluble substance and homogenizing the emulsion under elevated pressure.

5. The use of a product as claimed in claim 1 as additive to liquid human or animal food.

## Revendications

1. Préparations liquides stables, contenant comme composants essentiels :
a) au moins une substance liposoluble, acceptable physiologiquement, finement dispersée, comme phase dispersée,
b) du glycérol ou glycérol en mélange avec de l'eau, comme autre phase, en utilisant
c) des esters d'acide ascorbique avec des acides gras à longue chaîne, comme émulsionnant et stabilisant.

2. Préparations liquides stables selon la revendication 1, contenant comme composants essentiels :
a) 1 à 50 % en poids, rapportés à la préparation liquide, au moins d'une substance liposoluble, acceptable physiologiquement choisie parmi les vitamines A, D, E ou K ou leurs dérivés, les carotinoïdes et glycérides d'acides gras polyinsaturés,
b) 99 à 50 % en poids, rapportés à la préparation de glycérol ou glycérol/eau, en proportion de 100/0 à 50/50 et
c) 0,2 à 5 % en poids, rapportés à la préparation, à des esters de l'acide ascorbique avec des acides gras de 16 à 18 atomes C.

3. Préparations liquides stables selon la revendication 1, contenant les substances liposolubles, acceptables physiologiquement, en grosseurs de particules inférieures à 5 µm.

4. Procédé de préparation de préparations liquides stables selon la revendication 1, caractérisé par le fait que l'on émulsionne entre eux du glycérol, éventuellement en mélange avec de l'eau, un ester d'acide ascorbique avec un acide gras à longue chaîne, éventuellement avec addition de lessive de soude, en proportion molaire par rapport à l'ester de 0 à 1 et la substance liposoluble, acceptable physiologiquement, et on homogénéise l'émulsion sous pression élevée.

5. Utilisation de préparations selon la revendication 1 comme additif à des aliments ou fourrages.
